# EUROPEAN PATENT APPLICATION

(11) **EP 2 868 996 A1**
(43) Date of publication of application: **06.05.2015**
(21) Application number: 13808697.0
(22) Date of filing: 17.05.2013
(51) Int. Cl.: F24J 2/24, F24J 2/04, F24J 2/46, F24J 2/48

(54) **SOLAR-HEAT COLLECTION TUBE**

(30) Priority: 27.06.2012 JP 2012144042
(71) Applicant: KABUSHIKI KAISHA TOYOTA JIDOSHOKKI, Kariya-shi, Aichi-ken 448-8671 (JP)
(72) Inventor: TAKEUCHI, Norihito, Kariya-shi, Aichi-ken, 448-8671 (JP); HAYASHI, Hirohito, Kariya-shi, Aichi-ken, 448-8671 (JP); NORITAKE, Kazuto, Kariya-shi, Aichi-ken, 448-8671 (JP); MATSUDO, Akihisa, Kariya-shi, Aichi-ken, 448-8671 (JP)
(74) Representative: TBK
(86) International application number: PCT/JP2013/063818
(87) International publication number: WO 2014/002643

(57) **Abstract**

A solar-heat collection tube includes: a central metal tube through which a heat medium flows; a glass tube, which covers the outer periphery of the central metal tube such that an annular vacuum space is defined between the glass tube and the central metal tube; and a metal thermal-expansion-difference absorption portion, which absorbs the thermal expansion difference between the central metal tube and the glass tube. The glass tube includes an end portion having an end surface. The thermal-expansion-difference absorption portion is formed from metal, and includes a connecting end connected to the end portion of the glass tube. The connecting end is formed to be gradually reduced in thickness. The connecting end is connected to the glass tube in a state in which the connecting end enters the end portion of the glass tube through the end surface of the glass tube.

## Description

### TECHNICAL FIELD

The present invention relates to a solar-heat collection tube. More specifically, the present invention relates to a solar-heat collection tube that includes a central metal tube through which a heat medium flows, and a glass tube, which surrounds the central metal tube such that an annular space is defined between the glass tube and the central metal tube. The central metal tube and the glass tube are connected through a thermal-expansion-difference absorption portion, which absorbs the thermal expansion difference between the central metal tube and the glass tube.

### BACKGROUND ART

A metal tube through which a heat medium flows is heated by solar heat to heat the heat medium to generate and use heat. In this case, if the metal tube contacts the atmosphere, the heat medium is not efficiently heated since the heat of the heated metal tube is transferred to the atmosphere. Accordingly, a glass tube surrounds the metal tube to define an annular space between the glass tube and the metal tube. This limits the heat transfer from the metal tube heated by the solar heat to the atmosphere. However, since the metal tube and the glass tube have a great difference in the coefficient of thermal expansion, it is necessary to provide a thermal-expansion-difference absorption portion, which absorbs the thermal expansion difference between the metal tube and the glass tube. Since the temperature of the metal tube amounts to several hundreds of degrees, the thermal-expansion-difference absorption portion is formed of metal. Although a bellows is commonly used as the thermal-expansion-difference absorption portion, if a metal bellows and the glass tube are directly connected to each other, the joined portion of the glass tube with the bellows is easily damaged, when the bellows expands and contracts.

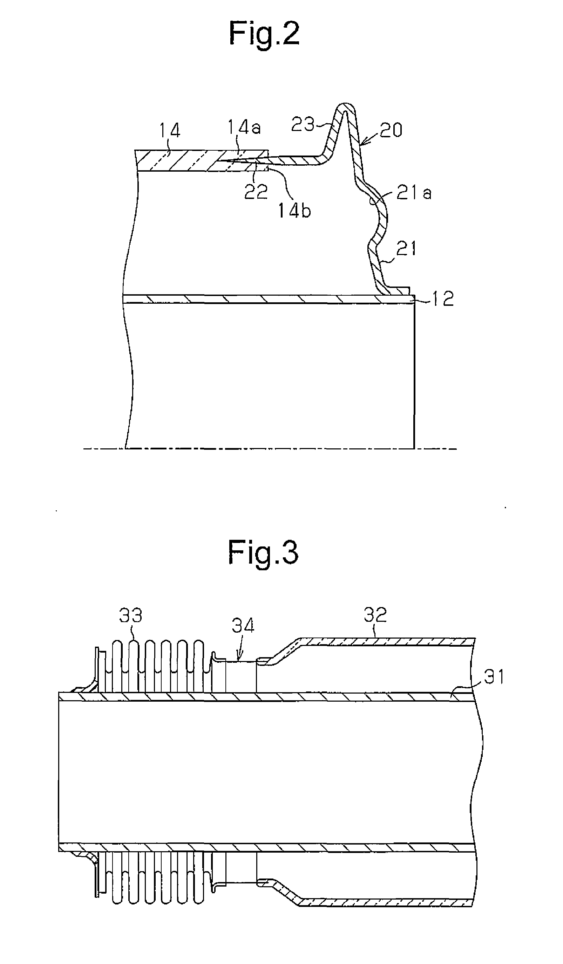

Conventionally, as shown in Fig. 3, a configuration in which a central metal tube 31 and a glass tube 32 are connected to each other using a bellows 33 and a glass/metal connecting element 34 has been proposed. Refer to Patent Document 1.

### PRIOR ART DOCUMENT

### Patent Document

Patent Document 1: US Patent No. 6,705,311

### SUMMARY OF THE INVENTION

### Problems that the Invention is to Solve

However, the range of the sunlight incident to the central metal tube 31 in the entire length of the solar-heat collection tube is equivalent to the range from which the range covered by the bellows 33 and the glass/metal connecting element 34 are removed. Accordingly, in the configuration in which the central metal tube 31 and the glass tube 32 are connected to each other using the glass/metal connecting element 34 as well as the bellows 33, an active area is reduced. The active area is defined by the length of the incident sunlight/the entire length of the solar-heat collection tube.

An objective of the present invention is to provide a solar-heat collection tube that increases the ratio of the length of the incident sunlight with respect to the entire length of the solar-heat collection tube compared with that of the prior art.

### Means for Solving the Problems

In order to achieve the above described objective, a solar-heat collection tube including: a central metal tube, a glass tube, and a thermal-expansion-difference absorption portion is provided. A heat medium flows through the central metal tube. The glass tube covers an outer periphery of the central metal tube such that an annular space is defined between the glass tube and the central metal tube. The glass tube includes an end portion having an end surface. The thermal-expansion-difference absorption portion absorbs a thermal expansion difference between the central metal tube and the glass tube. The thermal-expansion-difference absorption portion is formed of metal in an annular shape and includes a connecting end, which is connected to the end portion of the glass tube. The connecting end is formed to be gradually reduced in thickness. The connecting end is connected to the glass tube in a state in which the connecting end is inserted in the end portion of the glass tube through the end surface of the glass tube.

According to the above configuration, the thermal-expansion-difference absorption portion is formed of metal, the connecting end, which is connected to the end portion of the glass tube, is formed to be gradually reduced in thickness, and the connecting end is connected to the glass tube in the state in which the connecting end enters the end portion of the glass tube through the end surface of the glass tube. Accordingly, unlike the case in which the connecting end is connected to the end portion of the glass tube in the state in which the connecting end engages with the outer periphery of the end portion of the glass tube or the state in which the connecting end engages with the inner circumference of the end portion of the glass tube, an excessive force is less likely to be applied to the joined portion between the connecting end and the end portion of the glass tube. Accordingly, the thermal-expansion-difference absorption portion can be directly connected to the glass tube without using the glass/metal connecting element. Accordingly, the ratio of the length of the incident sunlight with respect to the entire length of the solar-heat collection tube is increased compared with that of the prior art.

It is preferable that the material of the thermal-expansion-difference absorption portion have a coefficient of linear expansion from 5.0 × 10⁻⁶ (K⁻¹) to 5.2 × 10⁻⁶ (K⁻¹). According to the above configuration, the solar-heat collection tube is configured such that there is almost no difference between the coefficient of thermal expansion of the thermal-expansion-difference absorption portion and the coefficient of thermal expansion of the glass tube, and the ratio of the length of the thermal-expansion-difference absorption means with respect to the entire length of the solar-heat collection tube is reduced.

It is preferable that the thermal-expansion-difference absorption portion be a metal bellows. According to the above configuration, the bellows, which is proven to be excellent as the thermal-expansion-difference absorption portion, is used with a simple change of the shape of the connecting end to the glass tube without effecting the expanding and contracting function of the bellows.

It is preferable that the metal bellows include an accordion portion with two ends, which each have a cylindrical portion. An inner diameter of the accordion portion is formed to be equal to an inner diameter of the cylindrical portion. The above configuration facilitates the manufacture of the bellows according to the hydroforming in comparison to the bellows in which the inner diameter of the accordion portion and the inner diameters of the cylindrical portions are different from each other. The connection between the connecting end portion of the bellows and the end portion of the glass tube is performed in the following manner. First, the end portion of the glass tube is heated to be in the melted state. Second, the bellows is rotated, and a predetermined amount of the connecting end is inserted through the end surface of the glass tube into the end portion of the glass tube coaxially with the glass tube. The rotation of the bellows is then stopped and the connecting end of the bellows is cooled. In this way, the temperature of the connecting end of the bellows is heated to be greater than or equal to the temperature of the end portion of the glass tube. In this case, the bellows is easily rotated and movably chucked, while maintaining the coaxial state between the bellows and the glass tube.

It is preferable that the central metal tube be formed of stainless steel. The stainless steel tube is connectable to the connecting end by welding. This easily ensures the airtight state of the joined portion. Further, the stainless steel tube excels in corrosion resistance and strength, is used in various fields, easily available, and advantageous in costs. Accordingly, the above advantage is efficiently employed by forming the central metal tube by stainless steel.

It is preferable that the metal bellows be connected, by welding, to a flange portion formed on the central metal tube. Since the diameter of the expanding and contracting portion of the metal bellows is greater than the diameter of the central metal tube, it is necessary to provide a flange portion on either the bellows or the central metal tube to connect the bellows and the central metal tube to each other by welding. When the flange portion is formed on the central metal tube, the flange portion is more easily formed than in the case in which the flange portion is formed on the bellows.

It is preferable the glass tube include a portion that is connected to the connecting end of the thermal-expansion-difference absorption portion and a remainder portion formed of a material that is different from a material of the connected portion. As a material of the connected portion, a glass is used that has a coefficient of thermal expansion that is closer to the coefficient of thermal expansion of the metal of the connecting end than the coefficient of thermal expansion of a glass forming the remainder portion is. In this case, since the difference between the coefficient of thermal expansion of the end portion of the glass tube and the coefficient of thermal expansion of the connecting end that directly contacts the end portion is reduced, the stress that is applied to the end portion of the glass tube is reduced as well.

### EFFECTS OF THE INVENTION

According to the present invention, the ratio of the length of the incident sunlight with respect to the entire length of the solar-heat collection tube is increased compared with that of the prior art.

### BRIEF DESCRIPTION OF THE DRAWINGS

Fig. 1A is a partial cross-sectional view of a solar-heat collection tube according to one embodiment;
Fig. 1B is a partially enlarged view of Fig. 1 A;
Fig. 2 is a partial cross-sectional view of a solar-heat collection tube using a thermal-expansion-difference absorption portion according to another embodiment; and
Fig. 3 is a partial cross-sectional view of a solar-heat collection tube of a prior art.

### MODES FOR CARRYING OUT THE INVENTION

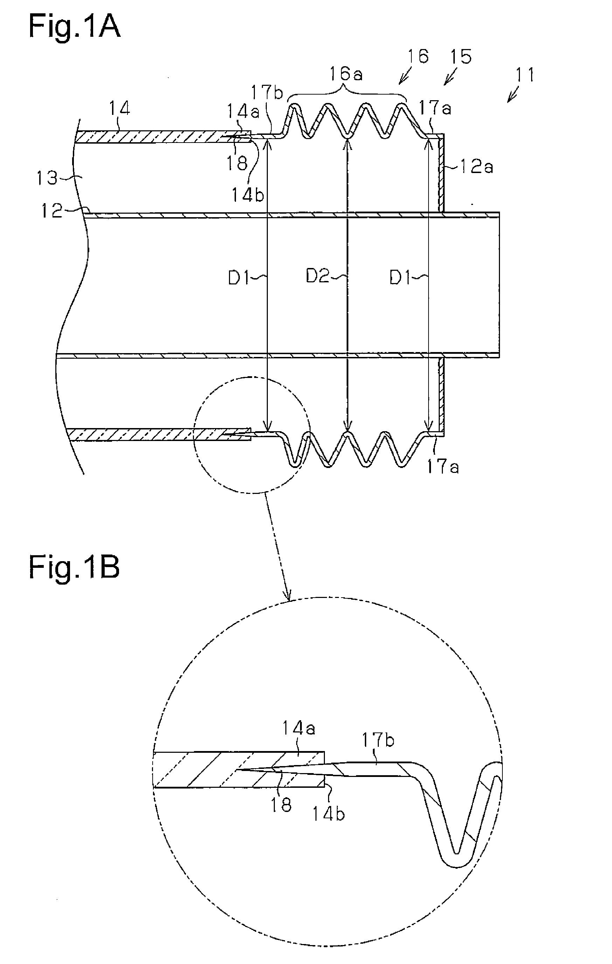

Hereinafter, one embodiment of the present invention will be described according to Figs. 1A and 1B.

As shown in Fig. 1A, a solar-heat collection tube 11 includes a central metal tube 12 through which a heat medium flows, a glass tube 14, which covers the outer periphery of the central metal tube 12 such that an annular vacuum space 13 as an annular space is defined between the glass tube 14 and the central metal tube 12, and a thermal-expansion-difference absorption portion 15, which absorbs the thermal expansion difference between the central metal tube 12 and the glass tube 14. The glass tube 14 includes an end portion 14a having an end surface 14b. Fig. 1A shows one end portion of the solar-heat collection tube 11. The other end portion is configured in the same manner as the one end portion. That is, the solar-heat collection tube 11 has a symmetric configuration in the end portions.

The glass tube 14 is formed shorter than the central metal tube 12, and the thermal-expansion-difference absorption portion 15 is connected between the end portion of the central metal tube 12 and the end portion 14a of the glass tube 14. According to the present embodiment, a metal bellows 16 is used as the thermal-expansion-difference absorption portion 15. The central metal tube 12 and the bellows 16 are formed of stainless steel (SUS). Cylindrical portions 17a and 17b are formed on corresponding ends of an accordion portion 16a, and the inner diameters D1 of the cylindrical portions 17a and 17b are set the same as the inner diameter D2 of the accordion portion 16a.

One end of the bellows 16 is connected, at the cylindrical portion 17a by welding, to the outer peripheral portion of the flange portion 12a formed on the central metal tube 12. The flange portion 12a is formed such that a circular SUS board including a hole is fixed to the cylindrical surface of the central metal tube 12 by welding.

The bellows 16 is connected, at the other cylindrical portion 17b, to the glass tube 14, and the connecting end 18 of the cylindrical portion 17b is formed such that the connecting end 18 is gradually reduced in thickness toward the tip end. That is, the thermal-expansion-difference absorption portion 15 is formed of metal in the annular shape such that the connecting end 18, which is connected to the end portion of the glass tube 14, is gradually reduced in thickness. The connecting end 18 is formed in a tapered shape. The connecting end 18 is connected to the glass tube 14 in the state in which the connecting end 18 enters the end portion 14a of the glass tube 14 through the end surface 14b of the glass tube 14. That is, the end portion 14a of the glass tube 14 and the connecting end 18 of the bellows 16 are connected to each other by what is called a Housekeeper seal.

The connection of the connecting end 18 of the bellows 16 to the glass tube 14 is performed prior to the connection of the bellows 16 to the central metal tube 12. For example, in the state in which the end portion 14a of the glass tube 14 is heated to be in the melted state, the bellows 16 is rotated in the state in which the temperature of the connecting end 18 is increased to be higher than or equal to the temperature of the end portion 14a of the glass tube 14, and a predetermined amount of the connecting end 18 is inserted through the end surface 14b into the end portion 14a of the glass tube 14 coaxially with the glass tube 14. The rotation of the bellows 16 is then stopped and the connecting end 18 of the bellows 16 is cooled. The cooling is not rapidly but gradually performed such that the heat distortion may not remain.

Next, the operation of the solar-heat collection tube 11 as above configured will be described.

In the solar-heat collection tube 11, while the heat medium introduced through one end of the central metal tube 12 into the central metal tube 12 is discharged through the other end of the central metal tube 12, the heat medium is heated by the heat conduction through the central metal tube 12. The heated heat medium is utilized for a heater, a calorifier, power generation, and the like.

For example, the solar-heat collection tube 11 is arranged such that the central metal tube 12 is located on the focus of the reflector that has a concave reflective surface. Although the temperature of the central metal tube 12 changes depending on the conditions such as the performance of the reflector, the environmental temperature, and the moving speed of the heat medium in the central metal tube 12, the temperature of the central metal tube 12 is increased to about 400 °C, and the temperature of the glass tube 14 is heated to be about 100 °C. Since the central metal tube 12 is covered by the glass tube 14 through the annular vacuum space 13, the heat of the central metal tube 12 heated by the sunlight incident through the glass tube 14 efficiently heats the heat medium that flows through the central metal tube 12.

The bellows 16 as the thermal-expansion-difference absorption portion 15 is formed of metal, the connecting end 18 connected to the end portion of the glass tube 14 is formed to be gradually reduced in thickness, and the connecting end 18 is connected to the glass tube 14 in the state in which the connecting end 18 enters the end portion 14a of the glass tube 14 through the end surface 14b of the glass tube 14. Accordingly, unlike the case where the connecting end 18 is connected to the end portion of the glass tube 14 in the state in which the connecting end 18 engages with the outer periphery of the end portion of the glass tube 14 or the state in which the connecting end 18 engages with the inner circumference of the end portion of the glass tube 14, an excessive force is less likely to be applied to the joined portion between the connecting end 18 and the end portion 14a of the glass tube 14 when the bellows 16 is expanded and contracted. In more details, when the connecting end 18 is connected to the end portion of the glass tube 14 at the outer periphery or the inner circumference of the glass tube 14, the contact surface between the connecting end 18 and the end portion of the glass tube 14 is a single annular portion. When the connecting end 18 is connected to the end portion of the glass tube 14 such that the connecting end 18 enters the end portion of the glass tube 14 through the end surface 14b of the glass tube 14, the connecting end 18 and the end portion of the glass tube 14 contact each other at two contact surfaces and the two contact surfaces are continuous at one end of each of the two contact surfaces. Accordingly, even if the bellows 16 is expanded or contracted in the state in which the relative displacement of the glass tube 14 to the connecting end 18 is regulated, the damage to the glass tube 14 is prevented. Accordingly, even if the thermal-expansion-difference absorption portion 15 is directly connected to the glass tube 14 without using the glass/metal connecting element, durability is improved. Therefore, the ratio of the length of the incident sunlight with respect to the entire length of the solar-heat collection tube is further increased compared with that of the prior art.

The present embodiment has the following advantages.

(1) The solar-heat collection tube 11 includes: a central metal tube 12 through which a heat medium flows, a glass tube 14, which covers the outer periphery of the central metal tube 12 such that an annular vacuum space 13 is defined between the glass tube 14 and the central metal tube 12, and a thermal-expansion-difference absorption portion 15, which absorbs the thermal expansion difference between the central metal tube 12 and the glass tube 14. The thermal-expansion-difference absorption portion 15 is formed of metal in the annular shape such that the connecting end 18, which is connected to the end portion 14a of the glass tube 14, is gradually reduced in thickness. The connecting end 18 is connected to the glass tube 14 in the state in which the connecting end 18 enters the end portion 14a of the glass tube 14 through the end surface 14b of the glass tube 14. Accordingly, the ratio of the length of the incident sunlight with respect to the entire length of the solar-heat collection tube is further increased compared with that of the prior art solar-heat collection tube.
(2) The metal bellows 16, which is proven to be excellent as the thermal-expansion-difference absorption portion, is used as the thermal-expansion-difference absorption portion 15 with a simple change of the shape of the connecting end 18 to the glass tube 14 without effecting the expanding and contracting function of the bellows 16.
(3) Since the central metal tube 12 is formed of stainless steel, the central metal tube 12 is connectable to other metal members by welding. This ensures the airtight state of the joined portion and the degree of vacuum of the annular vacuum space 13. Further, the stainless steel tube excels in corrosion resistance and strength, is used in various fields, easily available, and advantageous in costs.
(4) The metal bellows 16 is connected to the flange portion 12a formed on the central metal tube 12 by welding. Since the diameter of the expanding and contracting portion (accordion portion 16a) of the bellows 16 is greater than the diameter of the central metal tube 12, it is necessary to provide a flange portion on either the bellows 16 or the central metal tube 12 to connect the bellows 16 and the central metal tube 12 to each other by welding. According to the present embodiment, the flange portion 12a is formed on the central metal tube 12. This is easier than in the case in which the flange portion 12a is provided on the bellows 16.
(5) As for the bellows 16, the cylindrical portions 17a and 17b are formed on the corresponding ends of the accordion portion 16a, and the inner diameters D1 of the cylindrical portions 17a and 17b are set the same as the inner diameter D2 of the accordion portion 16a. Accordingly, the accordion portion 16a of the metal bellows 16 is manufactured according to a general method (hydroforming) including the steps of arranging a metal pipe in the mold and applying a pressure from inward to the metal pipe to expand the metal pipe utilizing a liquid pressure such as a water pressure in the state in which the two ends of the metal pipe are air tightly closed, for example. In comparison to the case in which the inner diameters D1 of the cylindrical portions 17a and 17b differ from the inner diameter D2 of the accordion portion 16a, the hydroforming is easier. When the connecting end 18 of the bellows 16 and the end portion 14a of the glass tube 14 are connected to each other, it is easier to rotate and movably chuck the bellows 16 while maintaining the coaxial state of the bellows 16 with respect to the glass tube 14 in comparison to the case in which the inner diameters D1 of the cylindrical portions 17a and 17b differ from the inner diameter D2 of the accordion portion 16a.

The embodiment is not limited to the above, and the present invention may be embodied as the followings, for example.

The thermal-expansion-difference absorption portion 15 is not limited to the metal bellows 16 as long as the thermal-expansion-difference absorption portion 15 is formed of metal in an annular shape and the connecting end 18, which is connected to the end portion 14a of the glass tube 14, is formed to be gradually reduced in thickness, and the connection end 18 is connected to the glass tube 14 in the state in which the connection end 18 enters the end portion 14a of the glass tube 14 through the end surface 14b of the glass tube 14. As the thermal-expansion-difference absorption portion 15, a metal diaphragm (for example, made of stainless steel) may be used. As shown in Fig. 2, a metal diaphragm 20 is not used as a valve, but is used to absorb the difference between the amount of thermal expansion of the central metal tube 12 and the amount of thermal expansion of the glass tube 14. The diaphragm 20 includes an annular body portion 21 with a diameter that is greater than the diameter of the glass tube 14, an annular connecting end 22, which is formed continuous to the outer peripheral edge of the body portion 21 and has a diameter the same as the diameter of the glass tube 14, and a continuous portion 23. The continuous portion 23 includes an inner circumferential end, which is continuous to the connecting end 22 such that the inner circumferential end bends radially outward, and an outer peripheral end, which is continuous to the outer peripheral edge of the body portion 21. An annular recess 21 a that ensures flexibility of the body portion 21 is formed in the body portion 21. The connecting end 22 is gradually reduced in thickness toward a tip end, and the connecting end 22 is connected to the glass tube 14 in the state in which the connecting end 22 enters the end portion 14a of the glass tube 14 through the end surface 14b of the glass tube 14. The diaphragm 20 is used when the difference between the amount of thermal expansion of the central metal tube 12 and the amount of thermal expansion of the glass tube 14 is less, i.e., when the full length of the solar-heat collection tube 11 is less.

The glass tube 14 is not limited to a glass tube that is entirely formed of the same material. The glass tube 14 may be configured such that a glass is used in which the coefficient of thermal expansion of a portion of the glass tube 14 that is connected to the connecting end 18 of the bellows 16 or the connecting end 22 of the diaphragm 20 and configures the Housekeeper seal is closer to the coefficient of thermal expansion of metal of the connecting ends 18 and 22 than the coefficient of thermal expansion of a glass that configures another portion of the glass tube 14. For example, a Kovar-glass is used. In this case, since the difference between the coefficient of thermal expansion of the end portion 14a of the glass tube 14 and the coefficient of thermal expansion of each of the connecting ends 18 and 22, which directly contacts the corresponding end portion 14a, is reduced, the stress applied to the end portion 14a is reduced.

The bellows 16 is not limited to a structure in which the inner diameters D1 of the cylindrical portions 17a and 17b are the same as the inner diameter D2 of the accordion portion 16a. The inner diameters D1 of the cylindrical portions 17a and 17b may be greater than or less than the inner diameter D2 of the accordion portion 16a.

The bellows 16 is not limited to a structure in which the diameters of the cylindrical portions 17a and 17b are the same with each other. The diameter of the cylindrical portion 17a may be greater than or less than the diameter of the cylindrical portion 17b.

The bellows 16 is not limited to a structure in which each of the pleats of the wall of the accordion portion 16a is V-shaped. The bellows 16 may be configured such that the accordion portion 16a includes a wall of pleats each being U-shaped.

The bellows 16 is not limited to a structure in which the inner diameter of the connecting end 18 is the same as the inner diameter of the accordion portion 16a. The bellows may be formed such that the position in which the connecting end 18 protrudes is located inward of an imaginary cylinder having an inner diameter that is equal to the outer diameter of the accordion portion 16a.

The connection between the bellows 16 and the central metal tube 12 may be performed by forming a flange portion on the cylindrical portion 17a of the bellows 16 without forming the flange portion 12a on the central metal tube 12 such that the flange portion is connected to the end portion of the central metal tube 12 by welding.

The central metal tube 12, the bellows 16, or the diaphragm 20 may be formed of metal other than the stainless steel.

The material of the bellows 16 or the diaphragm 20 as the thermal-expansion-difference absorption portion may be metal with a coefficient of linear expansion from 5.0 × 10⁻⁶ (K⁻¹) to 5.2 × 10⁻⁶ (K⁻¹). As an example of the metal, Kovar, which is an alloy in which nickel, cobalt, and the like are combined with iron, may be used. The composition is of 29% of Ni, 17% of Co, 0.2% of Si, 0.3% of Mn, and 53.5% of Fe in weight %. In this case, the portion of the glass tube 14 that configures the Housekeeper seal may be formed of Kovar-glass so that the coefficient of thermal expansion of the thermal-expansion-difference absorption portion is the same as the coefficient of thermal expansion of the portion of the glass tube 14 that configures the Housekeeper seal, and the ratio of the length of the incident sunlight with respect to the entire length of the solar-heat collection tube is increased.

The bellows 16 is not limited to a bellows that is manufactured by arranging a metal pipe in the mold, and applying pressure from inward to the metal pipe to expand the metal pipe utilizing a liquid pressure such as a water pressure in the state in which the two ends of the metal pipe are air tightly closed (hydroforming). For example, the bellows 16 may be a welded bellows. The welded bellows has a spring constant that is less than the spring constant of a molded bellows. The amount of expanding and contracting of the melted bellows in response to the applied force is greater than the amount of the expanding and contracting of the bellows that is formed of the same material and has the same length so that an excessive force is less likely to be applied to the joined portion between the connecting end 18 and the end portion 14a of the glass tube 14.

The flange portion 12a of the central metal tube 12 may be formed by bending the end portion of the central metal tube 12.

The diaphragm 20 may be configured such that the diaphragm 20 does not include the continuous portion 23 and the connecting end 22 protrudes from the outer peripheral portion of the body portion 21.

The annular space is not limited to the annular vacuum space 13. The annular space may be in the state in which a gas with a thermal conductivity that is less than the thermal conductivity of air fills the annular space at a pressure that is greater than or equal to the normal atmospheric pressure so that the thermal conductivity is the same as the thermal conductivity of vacuum. The term vacuum is directed to a state of a space filled with a gas having a pressure that is lower than the normal atmospheric pressure.

### DESCRIPTION OF REFERENCE NUMERALS

D1 and D2...inner diameters, 11...solar-heat collection tube, 12...central metal tube, 12a...flange portion, 13...annular vacuum space as an annular space, 14...glass tube, 14a...end portion, 15...thermal-expansion-difference absorption portion, 16...bellows, 16a...accordion portion, 17a and 17b...cylindrical portions, 18 and 22...connecting ends, and 20...diaphragm as the thermal-expansion-difference absorption portion.

## Claims

1. A solar-heat collection tube comprising:
a central metal tube through which a heat medium flows;
a glass tube, which covers an outer periphery of the central metal tube such that an annular space is defined between the glass tube and the central metal tube, wherein the glass tube includes an end portion having an end surface; and
a thermal-expansion-difference absorption portion, which absorbs a thermal expansion difference between the central metal tube and the glass tube, wherein
the thermal-expansion-difference absorption portion is formed of metal in an annular shape and includes a connecting end, which is connected to the end portion of the glass tube,
the connecting end is formed to be gradually reduced in thickness, and
the connecting end is connected to the glass tube in a state in which the connecting end is inserted in the end portion of the glass tube through the end surface of the glass tube.

2. The solar-heat collection tube according to claim 1, wherein a material of the thermal-expansion-difference absorption portion has a coefficient of linear expansion from 5.0 × 10⁻⁶ (K⁻¹) to 5.2 × 10⁻⁶ (K⁻¹).

3. The solar-heat collection tube according to claim 1 or 2, wherein the thermal-expansion-difference absorption portion is a metal bellows.

4. The solar-heat collection tube according to claim 3, wherein
the metal bellows includes an accordion portion with two ends, which each have a cylindrical portion, and
an inner diameter of the accordion portion is formed to be equal to an inner diameter of the cylindrical portion.

5. The solar-heat collection tube according to any one of claims 1 to 4, wherein the central metal tube is formed of stainless steel.

6. The solar-heat collection tube according to any one of claims 3 to 5, wherein the metal bellows is connected, by welding, to a flange portion formed on the central metal tube.

7. The solar-heat collection tube according to any one of claims 1 to 6, wherein
the glass tube includes a portion that is connected to the connecting end of the thermal-expansion-difference absorption portion and a remainder portion formed of a material that is different from a material of the connected portion, and
as a material of the connected portion, a glass is used that has a coefficient of thermal expansion that is closer to the coefficient of thermal expansion of the metal of the connecting end than the coefficient of thermal expansion of a glass forming the remainder portion is.

## Amended claims

### Amended claims under Art. 19.1 PCT

**1.** (amended) A solar-heat collection tube comprising:
a central metal tube through which a heat medium flows;
a glass tube, which covers an outer periphery of the central metal tube such that an annular space is defined between the glass tube and the central metal tube, wherein the glass tube includes an end portion having an end surface; and
a thermal-expansion-difference absorption portion, which absorbs a thermal expansion difference between the central metal tube and the glass tube, wherein
the thermal-expansion-difference absorption portion is formed of metal in an annular shape and includes a connecting end, which is connected to the end portion of the glass tube,
the connecting end is formed to be gradually reduced in thickness,
the connecting end is connected to the glass tube in a state in which the connecting end is inserted in the end portion of the glass tube through the end surface of the glass tube,
the glass tube includes a portion that is connected to the connecting end of the thermal-expansion-difference absorption portion and a remainder portion formed of a material that is different from a material of the connected portion, and
as a material of the connected portion, a glass is used that has a coefficient of thermal expansion that is closer to the coefficient of thermal expansion of the metal of the connecting end than the coefficient of thermal expansion of a glass forming the remainder portion is.

**2.** The solar-heat collection tube according to claim 1, wherein a material of the thermal-expansion-difference absorption portion has a coefficient of linear expansion from 5.0 × 10⁻⁶ (K⁻¹) to 5.2 × 10⁻⁶ (K⁻¹).

**3.** The solar-heat collection tube according to claim 1 or 2, wherein the thermal-expansion-difference absorption portion is a metal bellows.

**4.** The solar-heat collection tube according to claim 3, wherein
the metal bellows includes an accordion portion with two ends, which each have a cylindrical portion, and
an inner diameter of the accordion portion is formed to be equal to an inner diameter of the cylindrical portion.

**5.** The solar-heat collection tube according to any one of claims 1 to 4, wherein the central metal tube is formed of stainless steel.

**6.** The solar-heat collection tube according to any one of claims 3 to 5, wherein the metal bellows is connected, by welding, to a flange portion formed on the central metal tube.

**7.** cancelled)
